# EUROPEAN PATENT APPLICATION

(11) **EP 1 260 986 A2**
(43) Date of publication of application: **27.11.2002**
(21) Application number: 01121857.5
(22) Date of filing: 11.09.2001
(51) Int. Cl.: G11B 27/11, G11B 27/28, G11B 27/34, H04N 5/44, H04N 5/765

(54) **Recorded information managing apparatus and recorded information managing method**

(30) Priority: 18.04.2001 JP 2001119663
(71) Applicant: Kabushiki Kaisha Toshiba, Tokyo (JP)
(72) Inventor: Konda, Kazunobu, Minato-ku, Tokyo 105-8001 (JP)
(74) Representative: Henkel, Feiler, Hänzel

(57) **Abstract**

A plurality of AV appliances including a VTR (13) and a HDD (12) are connected to a network via a digital interface. The information with regard to the recorded information is recorded in a hard disk (12a) by a HDD (12) in the information recording state to record the information in a tape (13a) by the VTR (13). Then, the information, which is recorded in the hard disk (12a), is shared by respective AV appliances, which are connected to the network, so that it is possible to manage the recorded information in the tape (13a).

## Description

The present invention relates to a recorded information managing apparatus and a recorded information managing method for managing various information, which are recorded in a recording medium such as a magnetic tape or the like by using, for example, a recording reproducing apparatus such as a VTR (Video Tape Recorder) or the like.

As is generally known, as a method for managing informations such as various images and voice or the like, which are recorded in a magnetic tape by the VTR, conventionally, for example, a technology, which is described in Jpn. Pat. Appln. KOKAI Publication No. 6-36532, has been developed.

In other words, according to this publication, a sub code information showing attribute of the information, which is recorded in the magnetic tape, is recorded in a sub track in the magnetic tape, so that this sub code information is read out from the magnetic tape to be displayed to a user.

Furthermore, according to this publication, the sub code information, which is read from the magnetic tape, is stored in a storage section, which is incorporated in the VTR together with an identification number of the magnetic tape, so that the sub code information of the magnetic tape, which is not loaded in the VTR, is also capable of being displayed.

On the other hand, in recent years, a serial bus by the use of a digital interface base on, for example, IEEE (The Institute of Electrical and Electronics Engineers, Inc.) 1394 standard enables a network system, to which plural AV (Audio Video) appliances are connected in an open manner, to be built.

In such a network system, it is possible to designate other AV appliance arbitrarily and selectively from a specified AV appliance having an image display function so as to control the operation of the designated AV appliance.

Furthermore, since the managing means of the recorded information is capable of recording and reading a sub code information by only a VTR, this involves a problem such that other AV appliance is not capable of sharing the sub code information via a digital interface even when this VTR is connected to the network system.

For example, a publicly known art with regard to a constitution such that a plurality of AV appliances are connected to the network is disclosed in Jpn. Pat. Appln. KOKAI Publication No. 7-44477 and Jpn. Pat. Appln. KOKAI Publication No. 11-177919.

However, the former one discloses a method for exchanging a program for controlling other AV appliance each other upon building an AV appliance network and the latter one discloses a constitution such that a defect such as duplication of booking time or the like is not generated by opening the booking effect information to the other appliances by each AV appliance on the network. Therefore, both of them do not provide any suggestion with respect to how to solve the conventional problem.

The present invention has been made taking the above problems into consideration, an object of which is to provide a recorded information managing apparatus and a recorded information managing method, which enable other AV appliance to share the information recorded in the recording medium by a predetermined AV appliance in a network, which is connected to a plurality of AV appliances via a digital interface.

Furthermore, an another object of the present invention is to provide a recorded information managing apparatus and a recorded information managing method, which enable other AV appliance to share the digest information of the information recorded in the recording medium by a predetermined AV appliance in a network, which is connected to a plurality of AV appliances via a digital interface.

A recorded information managing apparatus according to the present invention is directed to a network system in which a plurality of AV appliances including a first AV appliance for recording and reproducing the information in a first recording medium, which is detachable, and a second AV appliance for recording and reproducing the information in a second recording medium, which is incorporated in this network system, are connected to each other via a digital interface.

A recorded information managing apparatus according to the present invention comprises a recording control section for, under the situation that the first AV appliance is recording the information in the first recording medium, recording the information with regard to this recorded information in the second recording medium by the second AV appliance; and the recorded information managing apparatus is capable of managing the information recorded in the first recording medium by reproducing the information recorded in the second recording medium by using the second AV appliance.

Furthermore, a recorded information managing method according to the present invention is directed to a network system in which a plurality of AV appliances including a first AV appliance for recording and reproducing the information in a first recording medium, which is detachable, and a second AV appliance for recording and reproducing the information in a second recording medium, which is incorporated in this network system, are connected to each other via a digital interface.

A recorded information managing method according to the present invention has a recording control step for, under the situation that the first AV appliance is recording the information in the first recording medium, recording the information with regard to this recorded information in the second recording medium by the second AV appliance; and the information recorded in the first recording medium is capable of being managed by reproducing the information recorded in the second recording medium by using the second AV appliance.

According to the above constitution and method, in a network, to which a plurality of AV appliances are connected via a digital interface, under the situation that the first AV appliance is recording the information in the first recording medium, the information with respect to this recorded information is recorded in the second recording medium by the second AV appliance, so that the other AV appliance is capable of sharing the information recorded in the recording medium by a predetermined AV appliances and managing it.

Furthermore, a recorded information managing apparatus according to the present invention is directed to a network system in which a plurality of AV appliances including a first AV appliance for recording and reproducing the information in a first recording medium, which is detachable, and a second AV appliance for recording and reproducing the information in a second recording medium, which is incorporated in this network system, are connected to each other via a digital interface.

A recorded information managing apparatus according to the present invention comprises a recording control section for, under the situation that the first AV appliance is continuously recording the information in the first recording medium, intermittently recording this recorded information in the second recording medium by the second AV appliance.

Further, a recorded information managing method according to the present invention is directed to a network system in which a plurality of AV appliances including a first AV appliance for recording and reproducing the information in a first recording medium, which is detachable, and a second AV appliance for recording and reproducing the information in a second recording medium, which is incorporated in this network system, are connected to each other via a digital interface.

A recorded information managing method according to the present invention has a recording control step for, under the situation that the first AV appliance is continuously recording the information in the first recording medium, intermittently recording this recorded information in the second recording medium by the second AV appliance.

According to the constitution and method, in a network, to which a plurality of AV appliances are connected via a digital interface, under the situation that the first AV appliance is continuously recording the information in the first recording medium, the information with regard to this recorded information is rather intermittently recorded in the second recording medium by the second AV appliance, so that the other AV appliance is capable of sharing the digest information of the information recorded in the recording medium by a predetermined AV appliances.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block structural diagram for illustrating an embodiment according to the present invention and explaining an outline of a home network;
FIG. 2 is a block diagram for explaining the operation for recording a program information in an AV-HDD and a D-VHS according to the present embodiment;
FIG. 3 is a flow chart for explaining the operation for recording a program information in the AV-HDD and the D-VHS according to the present embodiment;
FIG. 4 is a flow chart for explaining the operation for recording a program information in the AV-HDD in detail according to the present embodiment;
FIG. 5 is a view for explaining an example of a recording form of a digest information, which is created on a hard disk of the AV-HDD according to the present embodiment;
FIG. 6 is a view for explaining another example of a recording form of a digest information, which is created on a hard disk of the AV-HDD according to the present embodiment;
FIG. 7 is a view for schematically explaining a relationship between a track and a Descriptor, which are created on the hard disk of the AV-HDD according to the present embodiment;
FIG. 8 is a view for schematically explaining a configuration of an Entry Descriptor, which is created on the hard disk of the AV-HDD according to the present embodiment;
FIG. 9 is a flow chart for explaining an example of the operation for recording a picture recording specific number and an attribute information in the AV-HDD according to the present embodiment;
FIG. 10 is a flow chart for explaining another example of the operation for recording a picture recording specific number and an attribute information in the AV-HDD according to the present embodiment;
FIG. 11 is a flow chart for explaining the operation for reproducing a digest information of a program from the hard disk of the AV-HDD according to the present embodiment;
FIG. 12 is a view for explaining one example of a screen, of which specific number and attribute information are displayed in a list according to the present embodiment;
FIG. 13 is a flow chart for explaining the operation such that a DTV reproduces a track corresponding to a recording picture specific number, which is selected by a user, in the AV-HDD according to the present embodiment;
FIG. 14 is a block structural diagram for explaining an example, in which a part of the constitution is modified, according to the present embodiment
FIG. 15 is a block structural diagram for illustrating another embodiment according to the present invention and explaining an outline of a home network; and
FIG. 16 is a block diagram for explaining the operation for recording a program information in an AV-HDD and a D-VHS according to another embodiment.

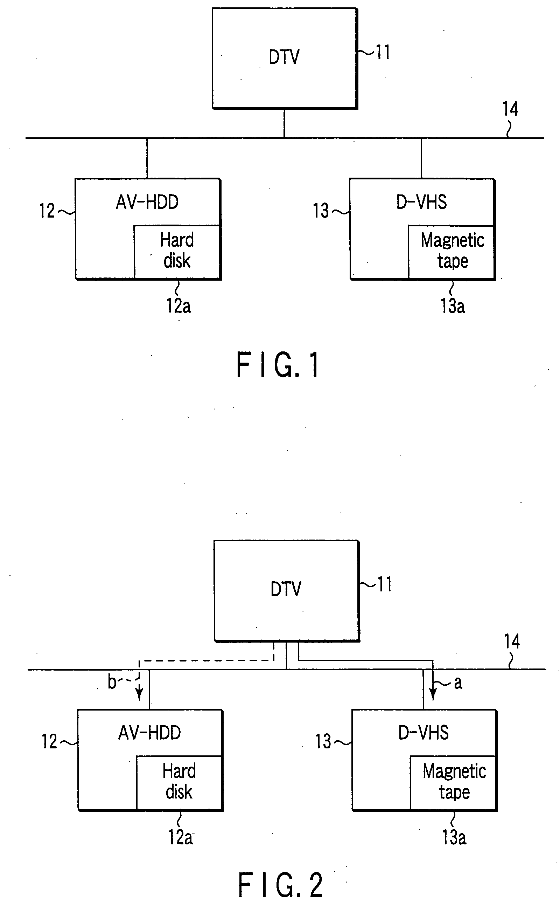

An embodiment of the present invention will be explained in detail with reference to the drawings below. FIG. 1 illustrates an outline of a home network, which will be described according to the present embodiment.

In this home network, an AV-HDD (hard disk drive) 12 and an D-VHS (digital VTR) 13 are connected to a DTV (digital television receiving apparatus) 11, which is a main control apparatus of the home network, via a serial bus 14 by the use of a digital interface base on IEEE 1394 standard.

In this case, in the case of recording the received program information in a magnetic tape 13a by controlling a D-VHS 13, the DTV 11 continuously controls the D-VHS 13 in the recording operation state as shown by a solid line arrow a in FIG. 2, so that the program information has been continuously recorded in the magnetic tape 13a.

At the same time, the DTV 11 intermittently controls the AV-HDD12 at a predetermined period in the recording operation state as shown by a broken line arrow b in FIG. 2 to intermittently record the same program information in a hard disk 12a, so that the DTV 11 creates a digest information of a program on the hard disk 12a.

Furthermore, when the operation for recording the program information in the magnetic tape 13a by the D-VHS 13, the DTV 11 creates an attribute information of the recording date of the program and the channel of the program or the like to supply it to the AV-HDD 12. Then, the DTV 11 associates the attribute information with the digest information, which has been already recorded, to record the attribute information on the hard disk 12a.

In this case, the DTV 11 automatically creates a picture recording specific number as an attribute information to output it to the AD-HDD 12 every when controlling the C-VHS 13 in the recording operation state. Then, the DTV 11 associates this a picture recording specific number with the digest information of the program to record the attribute information on the hard disk 12a.

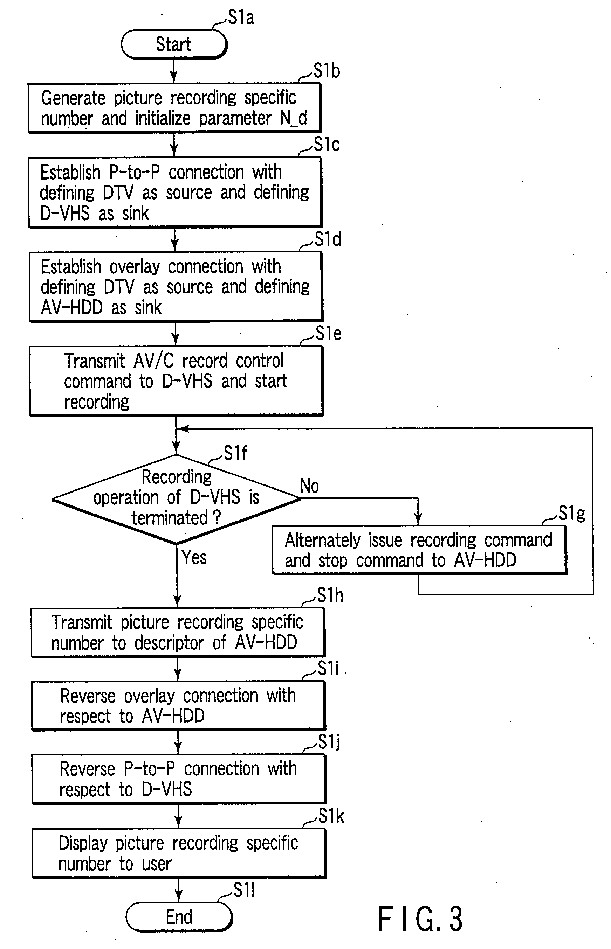

FIG. 3 is a flow chart for explaining the operation for controlling of the recording in the AV-HDD 12 and the D-VHS 13 by the DTV 11. At first, this recording control operation is started by demanding the DTV 11 to control the D-VHS 13 in the recording operation state to record the program information in the magnetic tape 13a (step S1a).

Then, the DTV 11 automatically creates a picture recording specific number as a specific number with respect to the demanded recording operation in the step S1b. For example, this picture recording specific number is created by combining the date of recording and the number of times that the recording operations are performed in the above date. Specifically, if the recording operation performed in January 15, 2001 is first one, its picture record specific number is "2001011501".

Furthermore, in order to create the digest information of the program on the hard disk 12a of the AV-HDD 12, the DTV 11 is required to intermittently control the AV-HDD 12 in the recording operation state at a predetermined period. Then, the DTV 11 initializes a parameter N_d, which shows the number of times that the AV-HDD 12 carries out the recording operations to zero in the step S1b.

In order that the DTV 11 controls the AV-HDD 12 in the intermittent recording operation state, there are a method for alternately repeating the recording operation and stop (STOP) and a method for alternately repeating the recording operation and pause (PAUSE). Further, in the case that the latter method is effected, namely, in the case that a pause command is used to stop the recording operation, the above parameter N_d is not needed to be initialized.

Next, at the step S1c, the DTV 11 establishes a P-to-P connection (Point-to-Point connection) for carrying out Isochronous transfer by the serial bus 14 on the code of IEEE 1394 standard on the basis of CMP (Connection Management Procedure), which is defined in IEC (International Electrotechnical Commission)-61883-1, with defining the DTV 11 as an output side (Source) and defining the D-VHS 13 as an inputting side (Sink).

After that, at the step S1d, the DTV 11 establishes Overlay connection on the code of the CMP, which is defined in the IEC-61883-1, with defining the DTV 11 as an output side (Source) and defining the AV-HDD 12 as an inputting side (Sink).

Then, at the step S1e, the DTV 11 transmits the AV/C Record Control command, which is a recording command, to the D-VHS 13 to start the recording operation to the magnetic tape 13a of the program information.

Under such a situation, the DTV 11 determines whether the recording operation of the D-VHS 13 is terminated or not at the step S1f. Then, if it is determined that the recording operation is not terminated (NO), the DTV 11 alternately issues a recording command and a stop command (or a pose command) to the AV- HDD 12 at the step S1g, so that the DTV 11 intermittently controls the AV-HSS 12 in the recording operation state at a predetermined period.

Therefore, the program information as same as the program information recorded in the D-VHS 13 is intermittently recorded on the hard disk 12a of the AV-HDD 12, so that the digest information of the program is created on the hard disk 12a and the processing is returned to the step S1f.

Then, in the case that it is determined that the recording operation of the D-VHS 13 is terminated at the step S1f (YES), at the step S1f, the DTV 11 associates the above picture record specific number and the other attribute information of the programs (the recording time and the channel of the program or the like) with the digest information to record them on the hard disk 12a.

This recording operation of the picture recording specific number and the attribute information is carried out when the DTV 11 reads/writes Open the description owned by the hard disk 12a of the AV-HDD 12 at an AV/C Open Descriptor Control command to transmit a Write Descriptor command to the AV-HDD 12 so that respective informations are written by the Descriptor.

After that, the DTV 11 reverses an overlay connection, which is established with respect to the AV-HDD 12, in the step S1i and the DTV 11 reverses a P-to-P connection, which is established with respect to the D-VHS 13, in the step S1j.

Then, the DTV 11 displays the picture recording specific number, which is generated in the step S1b, on a screen of the DTV 11 in the step S1k. Simultaneously, the DTV 11 instructs the user to write this specific number on a label of the magnetic tape 13a on the screen, so that this recording operation is terminated (step S11).

Furthermore, upon displaying the picture recording specific number on a screen in the above step S1k, it is also possible to display the picture recording specific number so as to be easily understood for the user by using a transformation table or the like, which are provided in advance. For example, it is possible to inversely transform the picture record specific number to the original recording date and the original number of times of recording and to display them. Specifically, if the picture record specific number is "2001011501", this is transformed to "year of the Christian era 2001, January 15, No. 1" or the like to be displayed.

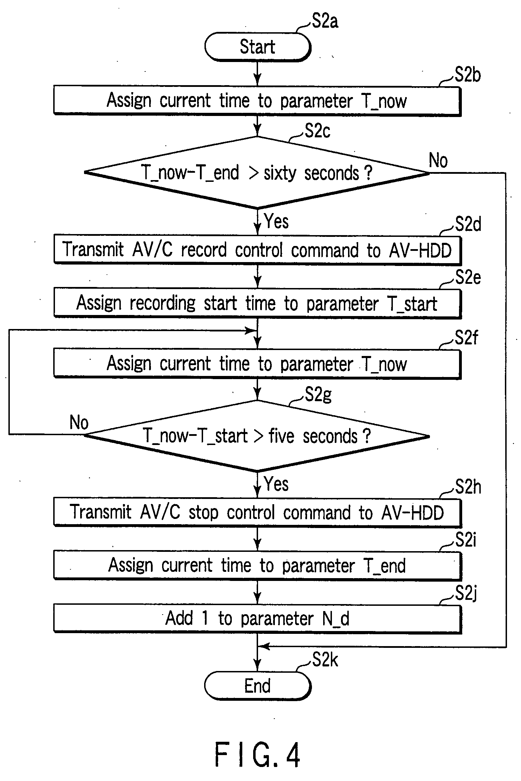

FIG. 4 shows a flow chart for explaining the operation for alternately transmitting the recording command and the stop command to the AV-HDD 12 shown in the step S1g in FIG. 3 in detail.

This flow chart illustrates an example such that the DTV 11 transmits the recording command to the AV-HDD 12 for every period of time (for example, sixty seconds) for only predetermined time (for example five seconds).

At first, when the step S2a is started, the DTV 11 obtains a current time from a timer, which is incorporated in the step S2b, and the obtained current time is assigned to a parameter T_now, which stores the current time.

Next, the DTV 11 determines whether the time obtained by subtracting a parameter T_end, which stores the time that transmission of the last recording command is finished to the AV-HDD 12, from a parameter T_now, which stores the current time, exceeds sixty seconds or not in the step S2c. Then, if it is determined that this time is not more than sixty seconds (NO), the processing is terminated (step S2k).

Furthermore, in the case that it is determined that this time exceeds sixty seconds in the step S2c (YES), the DTV 11 transmits the recording command (AV/C Record Control command) to the AV-HDD 12 in the step S2d, so that the operation of recording the program information in the hard disk 12a is carried out.

After that, the DTV 11 assigns the time when the recording operation to the AV-HSS 12 is started to a parameter T_start in the step S2e and the DTV 11 assigns the current time to a parameter T_now in the step S2f.

Then, the DTV 11 determines whether the time obtained by subtracting a parameter T_start, which stores the time that the recording is started, from a parameter T_now, which stores the current time, exceeds five seconds or not in the step S2g. Then, if it is determined that this time is not more than five seconds (NO), the processing is returned to the step S2f.

Furthermore, in the case that this time exceeds five seconds in the step S2g (YES), the DTV 11 transmits the stop command (AV/C Stop Control command) to the AV-HDD 12 to stop the operation of the recording the program information in the hard disk 12a in the step S2h.

After that, the DTV 11 assigns the current time to the parameter T_end, which stores the time that transmission of the last recording command is finished to the AV-HDD 12, in the step S2i and the DTV 11 adds 1 to a parameter N_d, which shows the number of times that the AV-HSS 12 performs the recording operation in the step S2j. Then, the processing is terminated (step S2k).

As explained in FIG. 4, according to the example such that the DTV 11 transmits the AV/C Record Control command to the AV-HDD 12 as the recording command and transmits the AV/C Stop Control command to the AV-HDD 12 as the stop command, the digest information, which is recorded on the hard disk 12a of the AV-HDD 12, is created as one track by a pair of the recording stop operation.

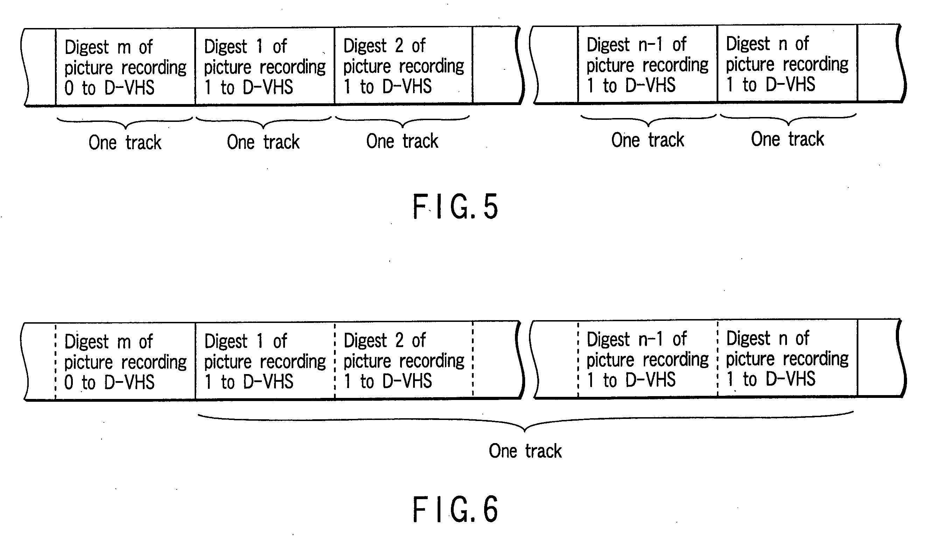

In other words, as shown in FIG. 5, the digest information, which is created on the hard disk 12a, comprises a plurality of tracks with respect to one recording operation of the program information to the D-VHS 3.

On the other hand, in place of the stop command in the above step S2h, a pause command (Pause Subfunction of AV/C Record Control command) may be also used. In the case that this pause command is used, as shown in FIG. 6, the digest information, which is created on the hard disk 12a, is configured as one track with respect to one recording operation of the program information to the D-VHS 13.

Next, a specific example of the operation for writing the picture record specific number and the attribute information in Descriptor of the AV-HDD 12, which is explained in the step S1h with reference to FIG. 3, will be described below. In other words, a database referred to as Descriptor, which stores the program information of respective tracks, is provided in an AV-HDD Disc Subunit, which is defined by the AV/C standard.

Further, respective AV appliances, which are connected to the serial bus 14 based on the IEEE 1394 standard, obtains an access authority to the Descriptor by transmitting an AV/C Open Descriptor Control command to the AV-HDD 12.

After that, in the case of reading the information from the AV-HDD 12, an AV/C Read Descriptor Control command is transmitted and-in the case of writing the information in the AV-HDD 12, an AV/C Write Descriptor Control command is transmitted, so that it becomes possible to obtain or updates the information, which is described in the Descriptor.

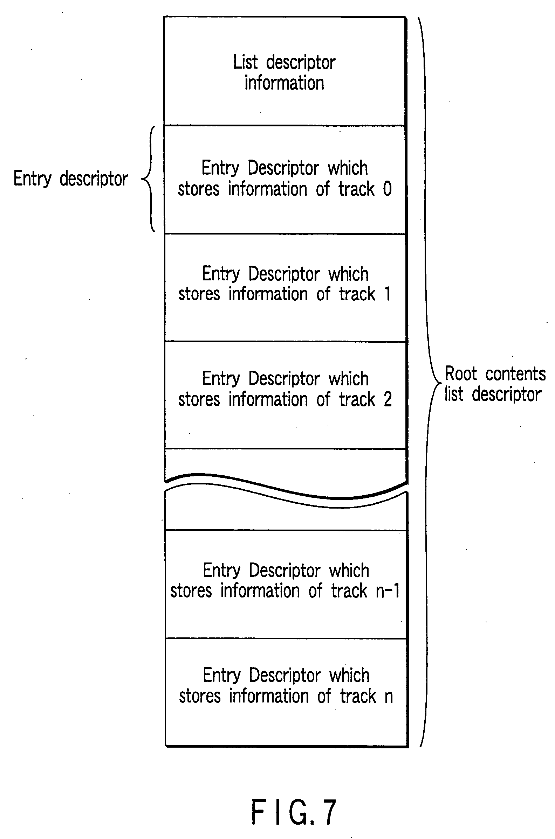

FIG. 7 schematically illustrates a relationship between each track and a Descriptor. The AV-HDD 12 has a root contents list descriptor as a database, which stores the program information of respective tracks. The root contents list descriptor comprises a part that stores the information specific to the list descriptor and another part, called an entry descriptor, that stores the information of one track. The entry descriptor corresponds to one track. FIG. 7 illustrates an example such that n+1 tracks from a track 0 to a track n are recorded.

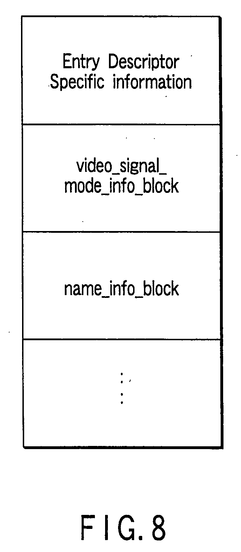

FIG. 8 schematically illustrates a constitution of the above Entry Descriptor. This Entry Descriptor is configured by combining logical components, which are referred to as info block.

As an example of info block, various components, which are not shown in FIG. 8, are considered in addition to video_signal_mode_info_block [a format of a stream of a recorded track (MPEG 2 and DV or the like) and a component which stores a frame rate or the like] and name_info_block (a component which stores a text information of a track). According to this example, the information showing that this information is the digest information is written in the name_info_block by the AV/C Write Descriptor Control command.

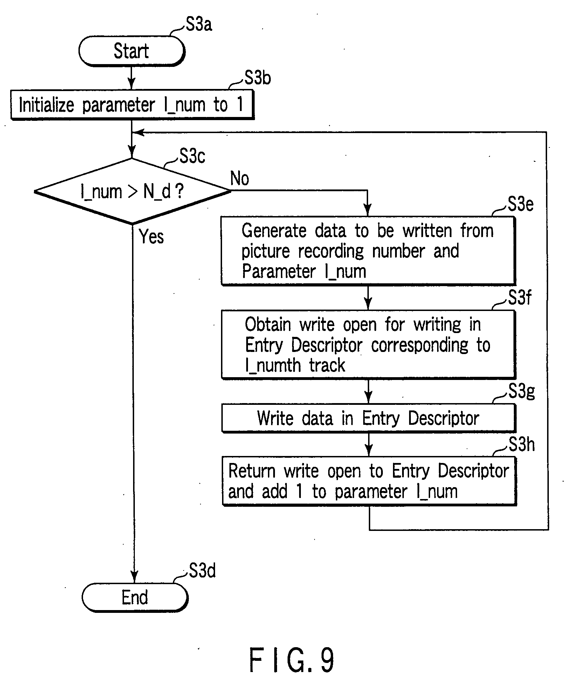

FIG. 9 shows a flow chart for explaining the recording operation of the picture recording specific number and the attribute information in the case that the digest information is recorded on a plurality of tracks on the hard disk 12a with respect to one recording operation of the program information to the D-VHS 13 as shown in FIG. 5.

At first, when the step S3a is started, the DTV 11 initializes into 1 a parameter I_num showing a forming order of a plurality of tracks, which are configured on the hard disk 12a by intermittently recording the program information in the step S3b.

Next, the DTV 11 determines whether this parameter I_num exceeds the parameter N_d, which shows the number of times that the AV-HDD 12 intermittently carries out the recording operations, or not in the step S3c. Then, if it is determined that the parameter I_num exceeds the parameter N_d (YES), the processing is terminated (step S3d).

Furthermore, in the case that the parameter I_num is not more than the parameter N_d in the step S3c (NO), the DTV 11 generates the data to be written in a track, which is designated by the forgoing parameter I_num, from the picture record specific number and the parameter I_num in the step S3e.

Specifically, assuming that the picture record specific number is "2001011501" and the parameter I_num is 1, the data to be written is "2001011501-001". Furthermore, the attribute information showing the time for recording the program, the channel of the program and the information with regard to the magnetic tape 13a or the like may be also generated as the data to be written.

After that, the DTV 11 transmits the AV/C Open Descriptor Control command to the AV-HDD 12 in the step S3f to obtain a Write Open to Entry Descriptor corresponding to a track, which is created when the AV-HDD 12 carries out I_numth intermittent record.

Then, the DTV 11 transmits the AV/C Write Descriptor Control command to the AV-HDD 12 in the step S3g to write the data generated in the step S3e in the name_info_block range of Entry Descriptor which obtains a Write Open.

After that, the DTV 11 transmits the AV/C Open Descriptor Control command to the AV-HDD 12 in the step S3h to return a Write Open to Entry Descriptor. At the same time, adding 1 to the parameter I_num, the processing is returned to the processing in the step S3c.

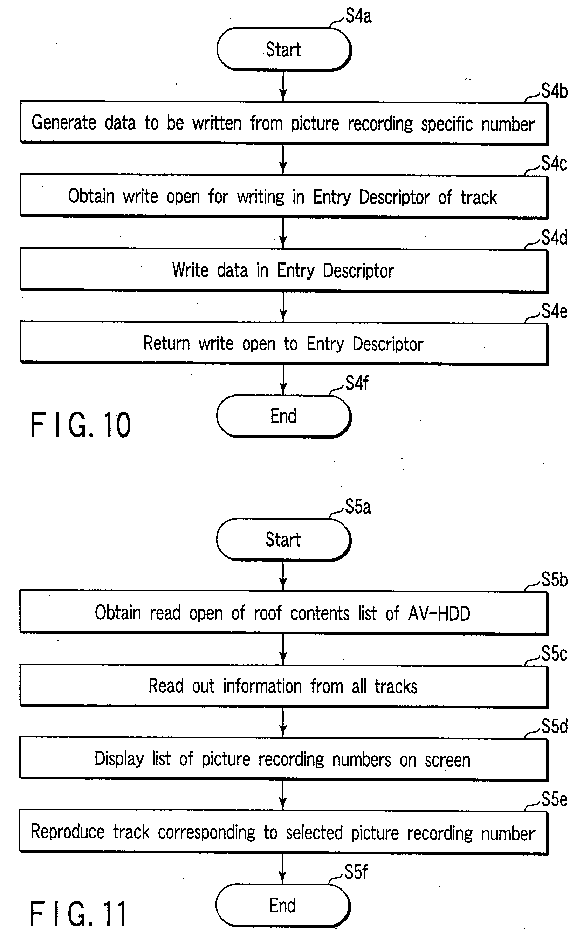

Next, as shown in FIG. 6, FIG. 10 illustrates a flow chart for explaining the recording operation of the picture recording specific number and the attribute information in the case that the digest information is recorded on one track on the hard disk 12a with respect to one recording operation of the program information to the D-VHS 13.

At first, if the step S4a is started, the data to be written from the picture recording specific number in the track is generated by DTV11 in the step S4b. Specifically, assuming that the picture recording specific number is "2001011501", the data to be written is defined as "2001011501". Furthermore, the attribute information showing the recording time and the channel of the recorded program or the like may be also generated as the data to be written.

After that, the DTV 11 transmits the AV/C Open Descriptor Control command to the AV-HDD 12 in the step S4c to obtain a Write Open to Entry Descriptor of the track, which is generated when the AV-HDD 12 carries out the intermittent recording.

Additionally, the DTV 11 transmits the AV/C Open Write Descriptor Control command to the AV-HDD 12 in the step S4d to write the data generated in the step S4b in the name_info_block range of Entry Descriptor which obtains a Write Open.

After that, the DTV 11 transmits the AV/C Open Descriptor Control command to the AV-HDD 12 in the step S4e to return a Write Open to Entry Descriptor. Then, the processing is terminated (step S4f).

According to the embodiment, since the program information is intermittently recorded on the hard disk 12a of the AV-HDD 12 as well as the D-VHS 13 records the program information in the magnetic tape 13a, it is definitely possible to create the digest information even when there is a limit that the program information is allowed to be copied only once.

Next, FIG. 11 shows a flow chart for explaining the operation for reproducing the digest information of a program, which is recorded in the hard disk 12a of the AV-HDD12. In the other words, if the step S5a is started, the DTV 11 transmits the Open Descriptor Control command to the AV-HDD 12. Further, in order to obtain the information recorded in the track, the DTV 11 obtains a Read Open of a Root Contest List of the Descriptor.

After that, the DTV 11 transmits the Read Descriptor Control command to the AV-HDD 12 in the step S5c, reads the information recording in the all tracks from an Entry Descriptor and retrieves the picture recording specific number and the attribute information from the read information to display a list of them on a screen in the step S5d.

Furthermore, upon displaying the picture recording specific number on a screen in the above step S5d, as described above, it is possible to display the picture recording specific number so as to be easily understood for the user by using a transformation table or the like, which are provided in advance. For example, it is possible to inversely transform the picture record specific number to year, month, date and the number of times of recording or the like and to display them. Specifically, if the picture record specific number is "2001011501", this is transformed to "year of the Christian era 2001, January 15, No. 1" or the like to be displayed.

Then, if the user performs the operation to select any number from the list showing the picture recording specific numbers, the DTV 11 transmits an AV/C Play Control command to the AV-HDD 12 in the step S5e and reproduces a track corresponding to the selected picture recording specific number. Then, the processing is terminated (step S5f).

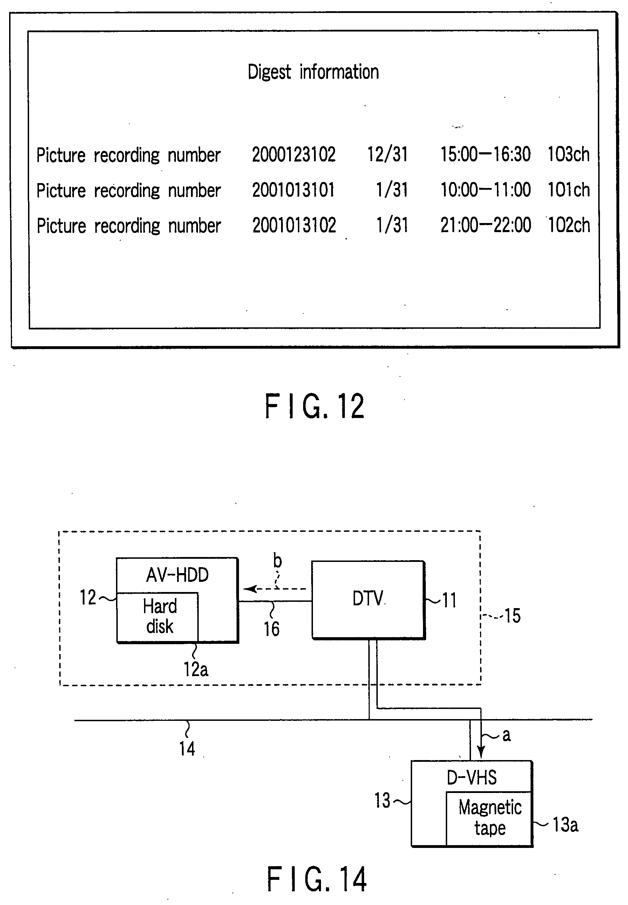

In this case, FIG. 12 illustrates an example of a screen, of which specific number and attribute information are displayed in a list in the above step S5d. On this screen, a list of the picture recording specific number itself, the data when the recording is performed and the channel or the like is displayed. These information displayed on a screen are included in the information, which is read from the Entry Descriptor in the step S5c.

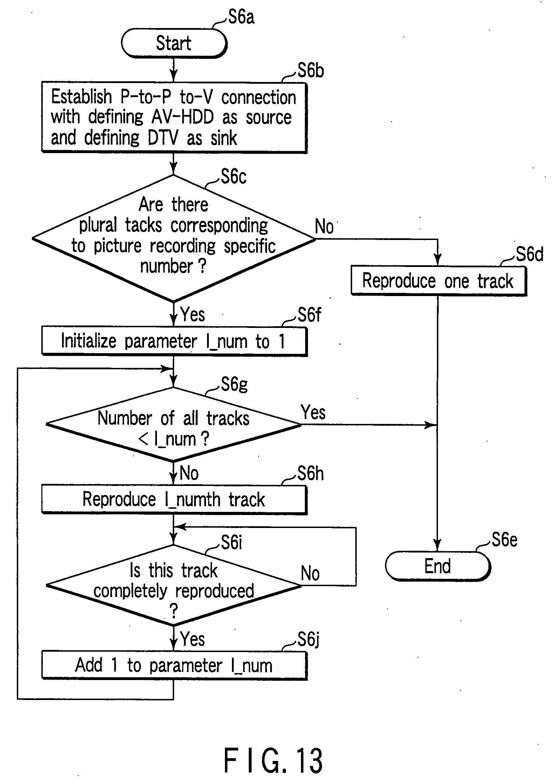

Next, FIG. 13 shows a flow chart for explaining the details of the operation for reproducing a track corresponding to a picture recording specific number, which is selected by a user, in the AV-HDD 12 in the step S5e in FIG. 11.

At first, if the step S6a is started, the DTV 11 establishes a P-to-P connection for carrying out Isochronous transfer by the serial bus 14 on the code of IEEE 1394 standard on the basis of CMP, which is defined in IEC 61883-1, with defining the AV-HDD12 as an output side (Source) and defining the DTV11 as an inputting side (Sink) in the step S6b.

After that, the DTV 11 determines whether there is one track corresponding to the picture recording specific number selected by the user or there are plural tracks corresponding to the picture recording specific number selected by the user by the information, which is obtained from the track in the step S6c.

For example, this determination operation depends on whether the picture recording specific number, which is described in name-info-block of the Entry Descriptor, corresponding to respective tracks, includes a parameter I_num showing the formation order of the track or not, specifically, this determination operation depends on whether the picture recording specific number is "2001011501" or "2001011501-001".

Then, if it is determined that there is one track corresponding to the picture recording specific number (NO), the DTV 11 transmits the AV/C Play Control command to the AV-HDD 12 so that the AV-HDD12 reproduces its one track in the step S6d and the processing is terminated (step S6e).

Furthermore, in the case that it is determined there are plural tracks corresponding to the picture recording specific number in the above step S6c (YES), the DTV 11 initializes into 1 a parameter I_num showing the formation order of the track in the step S6f.

After that, the DTV 11 determines whether the parameter I_num exceeds the number of the all tracks corresponding to the picture recording specific number or not in the step S6g. Then, if it is determined that it exceeds the number of the all tracks corresponding to the picture recording specific number (YES), the processing is terminated (step S6e).

Furthermore, in the case that it is determined that the parameter I num is not more than the number of the all tracks corresponding to the picture recording specific number (NO), the DTV 11 transmits the AV/C Play Control command to the AV-HDD 12 in the step S6h to reproduce the track, which is created in the I_numth time.

Then, the DTV 11 waits until a track, which is created in the I_numth time, is completely reproduced in the step S6i. If it is determined that the reproduction is terminated (YES), 1 is added to the parameter I_num in the step S6j and the processing is returned to the step S6g.

According to the embodiment, when the D-VHS 13 records the program information in the magnetic tape 13a, at the same time, the AV-HDD 12 records the program information in the hard disk 12a. Then, the digest information of the program is created on the hard disk 12a and the picture recording specific number showing the attribute of the program is recorded in the hard disk 12a.

Therefore, the DTV 11 controls the AV-HDD 12 to read the picture recording specific number from the hard disc 12a, so that the D-VHS 13 enables a list of the programs, which are recorded in the magnetic tape 13a, to be displayed on the screen and it is possible for a plurality of AV appliances to share the attribute information in the network.

Furthermore, seeing the screen on which a list of the programs is displayed and selecting a desired picture recording specific number, the digest information corresponding to its picture recording specific number on the hard disk 12a is reproduced, so that the user can easily retrieve the program which he or she wants to watch and listen to. In this case, the digest information is also capable of being shared for by a plurality of AV appliances in the network.

In the case that the user formally wants to watch and listen to the program, which is reproduced in the digest, the user may load the magnetic tape 13a, in which the picture recording specific number of the program, which is reproduced in digest, is described in a label, in the D-VHS 13 to normally reproduce the information to which its picture recording specific number is attached.

Furthermore, according to the embodiment, the information with respect to the whole program is recorded in the magnetic tape 13a by using the D-VHS 13 and the digest information of the program is recorded in the hard disk 12a by the AV-HDD 12, so that this has an advantage such that the rate of utilization of the capacity of the hard disk 12a is rather small compared with a case that the information of the whole program is recorded in the hard disk 12a.

This advantage comes into force upon recording the program information, of which copy is limited, namely, the program information that is allowed to be copied only once. In other words, if the whole of the program information that is allowed to be copied only once is recorded in the hard disk 12a, the magnetic tape 13a is not capable of copying this program information. Therefore, when the capacity of the hard disk 12a gets smaller; the program information is needed to be erased.

On the contrary, if the whole program information is recorded in the magnetic tape 13a from the first, any amount of the program information is capable of being recorded only by keeping that magnetic tape 13a and exchanging it with a new magnetic tape 13a. Furthermore, in the case that the capacity of the hard disk runs short since too many digest informations are recorded in the hard disk 12a, the digest information should be erased. However, there is no problem in erasing the digest informations.

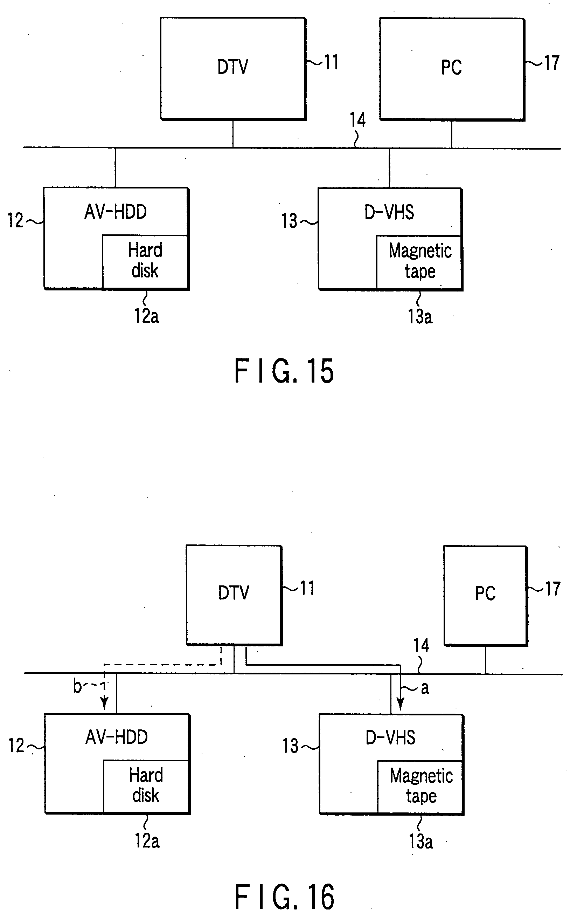

Next, FIG. 14 illustrates a modification of the embodiment. This modification will be explained below while giving the identical reference numerals with respect to the identical parts in FIG. 1. At first, an AV appliance 15, which integrates the DTV 11 and the AV-HDD 12, is connected to the D-VHS 13 via the serial bus 14 by use of a digital interface based on the IEEE 1394 standard.

In this case, the DTV 11 and the AV-HDD 12 are not required to be connected by the serial bus 14 based on the IEEE 1394 standard, so that they are connected by a normal bus line 16.

As shown by a solid line arrow a in FIG. 14, the program information to be outputted from the DTV 11 is continuously recorded in the magnetic tape 13a by the D-HVS 13 via the serial bus 14. At the same time, as shown by a broken line arrow b in FIG. 14, the program information to be outputted from the DTV 11 is intermittently recorded in the hard disk 12a by the AV-HDD 12 via the bus line 16.

Next, FIG. 15 illustrates an outline of a home network, which will be explained in another embodiment according to the present invention. In this home network, it is illustrated that the AV appliance for controlling the recording operation of the program information is other than the AV appliance for receiving the broadcast [DTV and ATB (Set Top Box)].

In other words, in addition to the DTV 11, the AV-HDD 12 and the D-VHS 13, a PC (Personal Computer) 17 as a main control apparatus is connected to the home network via the serial bus 14 by use of a digital interface based on the IEEE 1394 standard.

Then, in the case of recording the program information, which is received in the DTV 11, in the magnetic tape 13a by controlling the D-VHS 13, as shown by a solid line arrow a in FIG. 16, the program information is continuously recorded in the magnetic tape 13a by continuously controlling the D-VHS 13 in the recording operation state.

At the same time, by intermittently controlling the recording operation state at a predetermined period and intermittently recording the same program information in the hard disk 12a as shown by a broken line arrow b in FIG. 16, the PC 17 creates the digest information of the program information, which is received by the DTV 11, on the hard disk 12a.

Such a constitution may realize the substantially same effect as that of the embodiment.

## Claims

1. A recorded information managing apparatus to be used in a network system in which a plurality of AV appliances including a first AV appliance (13) for recording and reproducing the information in a first recording medium (13a), which is detachable, and a second AV appliance (12) for recording and reproducing the information in a second recording medium (12a), which is incorporated in this network system, are connected to each other via a digital interface,
**characterized in that** said recorded information managing apparatus comprises a recording control section (11) for, under the situation that said first AV appliance (13) is recording the information in said first recording medium (13a), recording the information with regard to this recorded information in said second recording medium (12a) by said second AV appliance (12); and
said recorded information managing apparatus is capable of managing the information recorded in said first recording medium (13a) by reproducing the information recorded in said second recording medium (12a) by using said second AV appliance (12).

2. The recorded information managing apparatus according to claim 1, **characterized in that** said recording control section (11) generates a specific number every when said first AV appliance (13) performs the recording operation of the information to said first recording medium (13a) by said first AV appliance (13) and said second AV appliance (12) records said specific number in said second recording medium (12a) while associating this specific number with the information with regard to the information, which is recorded in said first recording medium (13a) by said first AV appliance (13a).

3. The recorded information managing apparatus according to claim 2, **characterized in that** said specific number includes the information with regard to the date when said first AV appliance (13) carries out the recording operation of the information to said first recording medium (13a).

4. A recorded information managing apparatus to be used in a network system in which a plurality of AV appliances including a first AV appliance (13) for recording and reproducing the information in a first recording medium (13a), which is detachable, and a second AV appliance (12) for recording and reproducing the information in a second recording medium (12a), which is incorporated in this network system, are connected to each other via a digital interface,
**characterized in that** said recorded information managing apparatus comprises a recording control section (11) for, under the situation that said first AV appliance (13) is continuously recording the information in said first recording medium (13a), intermittently recording this recorded information in said second recording medium (12a) by said second AV appliance (12).

5. The recorded information managing apparatus according to claim 4, **characterized in that** said recording control section (11) alternately controls said second AV appliance (12) in a recording state for a predetermined time and in a stop state for a predetermined time.

6. The recorded information managing apparatus according to claim 4, **characterized in that** said recording control section (11) alternately controls said second AV appliance (12) in a recording state for a predetermined time and in a pause state for a predetermined time.

7. A recorded information managing method to be used in a network system in which a plurality of AV appliances including a first AV appliance (13) for recording and reproducing the information in a first recording medium (13a), which is detachable, and a second AV appliance (12) for recording and reproducing the information in a second recording medium (12a), which is incorporated in this network system, are connected to each other via a digital interface,
**characterized in that** said recorded information managing method has a recording control step for, under the situation that said first AV appliance (13) is recording the information in said first recording medium (13a), recording the information with regard to this recorded information in said second recording medium (12a) by said second AV appliance (12); and
the information recorded in said first recording medium (13a) is capable of being managed by reproducing the information recorded in said second recording medium (12a) by using said second AV appliance (12).

8. The recorded information managing method according to claim 7, **characterized in that** said recording control step generates a specific number every when said first AV appliance (13) performs the recording operation of the information to said first recording medium (13a) by said first AV appliance (13) and said second AV appliance (12) records said specific number in said second recording medium (12a) while associating this specific number with the information with regard to the information, which is recorded in said first recording medium (13a) by said first AV appliance (13).

9. A recorded information managing method to be used in a network system in which a plurality of AV appliances including a first AV appliance (13) for recording and reproducing the information in a first recording medium (13a), which is detachable, and a second AV appliance (12) for recording and reproducing the information in a second recording medium (12a), which is incorporated in this network system, are connected to each other via a digital interface, **characterized in that** said recorded information managing method has a recording control step for, under the situation that said first AV appliance (13) is continuously recording the information in said first recording medium (13a), intermittently recording this recorded information in said second recording medium (12a) by said second AV appliance (12).

10. The recorded information managing method according to claim 9, **characterized in that** said recording control step alternately controls said second AV appliance (12) in a recording state for a predetermined time and in a stop state for a predetermined time.

11. The recorded information managing method according to claim 9, **characterized in that** said recording control step alternately controls said second AV appliance (12) in a recording state for a predetermined time and in a pause state for a predetermined time.

12. A recorded information managing system to be used in a network system in which a plurality of AV appliances including a first AV appliance (13) for recording and reproducing the information in a first recording medium (13a), which is detachable, and a second AV appliance (12) for recording and reproducing the information in a second recording medium (12a), which is incorporated in this network system, are connected to each other via a digital interface,
**characterized in that**, under the situation that said first AV appliance (13) is recording the information in said first recording medium (13a), said second AV appliance (12) records the information with regard to this recorded information in said second recording medium (12a); and said recorded information managing system is capable of managing the information recorded in said first recording medium (13a) by reproducing the information recorded in said second recording medium (12a) by using said second AV appliance (12).

13. The recorded information managing system according to claim 12, **characterized in that** said first AV appliance (13) generates a specific number every when said first AV appliance (13) performs the recording operation of the information to said first recording medium (13a) and said second AV appliance (12) records said specific number in said second recording medium (12a) while associating this specific number with the information with regard to the information, which is recorded in said first recording medium (13a) by said first AV appliance (13).

14. A recorded information managing system to be used in a network system in which a plurality of AV appliances including a first AV appliance (13) for recording and reproducing the information in a first recording medium (13a), which is detachable, and a second AV appliance (12) for recording and reproducing the information in a second recording medium (12a), which is incorporated in this network system, are connected to each other via a digital interface,
**characterized in that**, under the situation that said first AV appliance (13) is continuously recording the information in said first recording medium (13a), said second AV appliance (12) intermittently records this recorded information in said second recording medium (12a).

15. The recorded information managing system according to claim 14, **characterized in that** said second AV appliance (12) is alternately controlled in a recording state for a predetermined time and in a stop state for a predetermined time.

16. The recorded information managing system according to claim 14, **characterized in that** said second AV appliance (12) is alternately controlled in a recording state for a predetermined time and in a pause state for a predetermined time.

17. A recorded information managing apparatus **characterized by** comprising:
a first AV device (13) configured to record and reproduce information on and from a first recording medium (13a) that is removably attached to the apparatus;
a second AV device (12) configured to be connected to the first AV device (13) by a digital interface in a network and to record and reproduce information on and from a second recording medium (12a) incorporated in the apparatus; and
means for causing the second AV device (12) to record, on the second recording medium (12a), information about the information which the first AV device (13) is recording on the first recording medium (13a),
wherein the second AV device (12) reproduces the information from the second recording medium (12a), thereby to manage the information stored on the first recording medium (13a).

18. A recorded information managing apparatus **characterized by** comprising:
a first AV device (13) configured to record and reproduce information on and from a first recording medium (13a) that is removably attached to the apparatus;
a second AV device (12) configured to be connected to the first AV device (13) by a digital interface in a network and to record and reproduce information on and from a second recording medium (12a) incorporated in the apparatus; and
means for causing the second AV device (12) to record information intermittently on the second recording medium (12a), while the first AV device (13) is continuously recording the information on the first recording medium (13a).
